(19)

Europäisches
Patentamt
European
Patent Office
Office européen
des brevets

(11) **EP 3 163 827 A1**

(12) **EUROPEAN PATENT APPLICATION**

(43) Date of publication:
**03.05.2017  Bulletin 2017/18**

(51) Int Cl.:
***H04L 27/26*** *(2006.01)*

(21) Application number: **15192273.9**

(22) Date of filing: **30.10.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Huawei Technologies Co., Ltd.
Longgang District
Shenzhen, Guangdong 518129 (CN)**

(72) Inventors:
 • **XU, Baicheng
  16440 Kista (SE)**

 • **ALMERS, Peter
  16440 Kista (SE)**
 • **CHEN, Jianjun
  16440 Kista (SE)**
 • **CHEN, Junshi
  16440 Kista (SE)**

(74) Representative: **Goddar, Heinz J.
BOEHMERT & BOEHMERT
Anwaltspartnerschaft mbB
Pettenkoferstrasse 20-22
80336 München (DE)**

(54) **METHOD AND DEVICE FOR PEAK-TO-AVERAGE POWER RATIO REDUCTION IN AN OFDM
SYSTEM**

(57)    A signal determination unit for determining one
or more reduction signals for transmission on one or more
reduction subcarriers of an OFDM signal in a Tone Res-
ervation PAPR reduction scheme, wherein the signal de-
termination unit comprises an amplitude determination
unit configured to determine a real part and an imaginary
part of a target reduction amplitude (also called clipping
noise) of the one or more reduction signals. A Weighted
Least Square algorithm is proposed with separate real
and imaginary parts matching resolution.

**FIG. 4**

**Description**

TECHNICAL FIELD

The present invention relates to a signal determination unit and a method for determining one or more reduction signals for transmission on one or more reduction subcarriers of an OFDM signal. The present invention also relates to a computer-readable storage medium.

BACKGROUND

The transmitted signals in an Orthogonal Frequency Division Multiplexing (OFDM) system can have high peak values in the time domain. This is because many sub-carrier components are added via an Inverse Fast Fourier Transformation (IFFT) operation, i.e., some input symbol combinations will be added in a constructive fashion leading to a large peak for some time domain samples. As a result, OFDM systems are known to have a high Peak-to-Average Power Ratio (PAPR) when compared to single-carrier systems.
The PAPR can be defined by the following equations:

$$PAPR_{dB} = 10 \log_{10} \frac{max(s_n s_n^* | n \in [0, N-1])}{E[s_n s_n^*]}$$

$$s_n = A \sum_{k \in S} d_k e^{\frac{j2\pi kn}{N}}$$

where $s_n$ is a n$^{th}$ time domain sample; $d_k$ is a signal on a k$^{th}$ sub-carrier; $S$ is the index set of sub-carriers for data transmission; $N$ is the IFFT size; $max(\cdot)$ is the operation of maximal value selection for a sequence or variable; $E[\cdot]$ is the operation of mathematical expectation; and $A$ is the scaling factor of IFFT, which is usually set as $\frac{1}{\sqrt{N}}$ in implementation.

A high PAPR can be one of the most detrimental aspects in an OFDM system since a large number of dBs have to be backed-off to keep a linear operation in Analog-to-Digital Convertor (ADC), Digital-to-Analog Convertor (DAC) and Power Amplifier (PA).
In particular, two drawbacks caused by a high PAPR include:

- It decreases the signal-to-quantization noise ratio (SQNR) in the ADC/DAC.
- It decreases the efficiency of the power amplifier in the transmitter and thus increases cost and power consumption of the power amplifier in the transmitter.

Hence, it is important to limit the PAPR to guarantee the SQNR in ADC/DAC and to reach a cost effective PA design (low cost, low weight, low volume, and/or high efficiency).
In conventional solutions for PAPR reduction, complexity can be high because of the requirement of iterative processing. For example, some approaches have been suggested that first generate the PAPR signals to suppress the original peaks. However, the PAPR signals may generate new peaks after being added. Therefore, several iterations are needed to ensure no new peaks are generated. (The peaks here can be seen as some samples with power above a certain threshold).

SUMMARY OF THE INVENTION

The objective of the present invention is to provide a signal determination unit and a method for determining one or more reduction signals for transmission on one or more reduction subcarriers of an OFDM signal, wherein the signal determination unit and the method overcome one or more of the above-mentioned problems of the prior art. In particular, an objective of this invention can include computing one or more signals transmitted on one or more reduction subcarriers to reduce the PAPR.
A first aspect of the invention provides a signal determination unit for determining one or more reduction signals for transmission on one or more reduction subcarriers of an OFDM signal, wherein the signal determination unit comprises an amplitude determination unit configured to determine a real part and an imaginary part of a target reduction amplitude of the one or more reduction signals.

The signal determination unit of the first aspect provides a way of PAPR reduction for OFDM systems which is especially suitable for LTE. In particular, the signal determination unit of the first aspect separately determines a real part and an imaginary part of the target reduction amplitude. This has the advantage that the one or more reduction signals can be controlled precisely, for example to ensure that the reduction signals have a low power.

In general, reduction signals will not increase the peak power of time domain samples, but they will increase the average power, since they represent additional signals that are sent on otherwise blank sub-carriers. Computing real and imaginary part of the target reduction amplitude will help to reduce the increased average power caused by reduction signals. For example, if the peak power of a certain sample is caused by its real part only, then we only need to suppress its real part instead of the whole sample.

This will help to reduce the power of the reduction signals. Then the increased average power caused by reduction signals is reduced accordingly.

Furthermore, iterative processing can be avoided, which significantly reduces computational complexity.

The target reduction amplitude can typically only be approximated by the one or more reduction signals, due to the limited number of reduction subcarriers. Therefore, the signal determination unit may comprise an estimator for estimating the one or more reduction signals.

In a first implementation of the signal determination unit according to the first aspect, the amplitude determination unit is configured to determine a real part $a'_m$ of an absolute value of the target reduction amplitude and an imaginary part $b'_m$ of an absolute value of the target reduction amplitude as:

$$a'_m = \max\left(|\mathrm{Re}(g_m)| - \alpha\sqrt{\bar{p}}, 0\right)$$

$$b'_m = \max\left(|\mathrm{Im}(g_m)| - \alpha\sqrt{\bar{p}}, 0\right)$$

and/or a signed real part $a_m$ and a signed imaginary part $b_m$ of the target reduction amplitude as:

$$a_m = a'_m \cdot \mathrm{sign}\left(\mathrm{Re}(g_m)\right)$$

$$b_m = b'_m \cdot \mathrm{sign}\left(\mathrm{Im}(g_m)\right)$$

wherein $g_m$ is a value of a peak of the OFDM signal, $\alpha$ is a predetermined threshold parameter and $\bar{p}$ is a time-domain average power of a data part of the OFDM signal.

These represent particularly efficient ways of computing the real and imaginary parts of the target reduction amplitude.

In a second implementation of the signal determination unit according to the first aspect, the signal determination unit further comprises a power determination unit configured to compute one or more power values of one or more time-domain samples of a data part of the OFDM signal, and a peak selection unit configured to select one or more peaks of the data part of the OFDM signal based on the computed power values, wherein the amplitude determination unit is configured to determine the real part and the imaginary part of the target reduction amplitude based on the selected one or more peaks.

The power determination unit can for example be configured to compute the one or more power values by computing a square of an absolute value of the one or more time-domain samples.

The peak selection unit can be configured to select the one or more peaks e.g. by comparing the one or more power values with a predetermined threshold. Alternatively, the peak selection unit can be configured to select the largest n peaks, e.g. the largest n peaks during a predetermined time-span, wherein n is a predetermined number.

Preferably, the signal determination unit is configured to not only suppress the highest peaks (with power above the threshold), but also suppresses the second highest peaks (with power less than but close to the threshold). This has the advantage that it is avoided that the second highest peaks become new peaks after adding PAPR signals.

The amplitude determination unit can be configured to base its computation of the real and imaginary part of the target reduction amplitude on the one or more selected peaks.

In a third implementation of the signal determination unit according to the first aspect, the signal determination unit further comprises an estimator configured to estimate the one or more reduction signals using weighted least squares estimation based on the real part and the imaginary part of the target reduction amplitude.

Using weighted least-squares estimation has the advantage that in the one or more reduction signals higher peaks have a higher priority for the approximation. Furthermore, the real and imaginary part of the target reduction amplitude can be determined with high computational efficiency.

In a fourth implementation of the signal determination unit according to the first aspect, the estimator is configured to estimate a vector $\boldsymbol{x}$ of frequency-domain values of $K$ reduction signals for transmission on $K$ reduction subcarriers as:

$$\boldsymbol{x} = \begin{bmatrix} x_0 \\ \vdots \\ x_{K-1} \end{bmatrix} = \left( \mathrm{T}_{yx}^H \mathrm{W} \mathrm{T}_{yx} \right)^{-1} \mathrm{T}_{yx}^H \mathrm{W} \boldsymbol{y},$$

wherein $\mathrm{T}_{yx} = \begin{bmatrix} \mathrm{T} \\ \mathrm{T} \end{bmatrix}$ and

$$\mathrm{T} = \begin{bmatrix} t_{0,0} & \cdots & t_{0,K-1} \\ \vdots & \ddots & \vdots \\ t_{M-1,1} & \cdots & t_{M-1,K-1} \end{bmatrix}, t_{m,k} = A e^{\frac{j2\pi i_m j_k}{N}}$$

wherein $j_k$, $k = 0, 1, \cdots, K - 1$ are subcarrier indices of the $K$ reduction subcarriers, $i_m$, $m = 0,1,\cdots,M - 1$ are time-domain sample indices of $M$ selected peaks, $A$ is a scaling factor of an inverse Fourier transformation, $N$ is a number of time-domain samples of the inverse Fourier transformation, $\boldsymbol{y}$ is a vector of time-domain values of the target reduction amplitude, and W is a matrix with diagonal entries that comprise weights of elements of $\boldsymbol{y}$.

The above equations represent a particularly efficient way of computing the weighted least squares estimate of the vector $\boldsymbol{x}$ of frequency-domain values of the $K$ reduction signals.

In a fifth implementation of the signal determination unit according to the first aspect, the signal determination unit further comprises a weight assignment unit configured to assign one or more weights to one or more elements of a vector $\boldsymbol{y}$ of time-domain values of the target reduction amplitude.

In particular, higher target-reduction amplitude values can be assigned higher weight values. This has the advantage that high amplitude peaks can be eliminated more reliably.

In another special case the weights that are assigned are all 1.

In a sixth implementation of the signal determination unit according to the first aspect, a weight assignment $w_m$ for an $m$-th element of the vector $\boldsymbol{y}$ is determined as $w_m = |y_m|^2$.

In particular, this can be based on a power value computed with the power determination unit. Assigning higher weights to time-domain elements that correspond to a high power value as measured by the square of the absolute value has the advantage that it can be ensured that a highest importance is assigned to reducing the high-power peaks.

In a seventh implementation of the signal determination unit according to the first aspect, the signal determination unit further comprises a scaling unit configured to scale a reduction signal $x_k$ of a $k$-th reduction subcarrier to obtain a scaled $k$-th reduction signal $c_k$ according to:

$$c_k = \begin{cases} \dfrac{x_k}{|x_k|} \sqrt{l_k}, \text{ if } |x_k|^2 > l_k \\ x_k, \text{ otherwise} \end{cases}$$

wherein $l_k$ is a power limitation of a $k$-th reduction subcarrier.

This has the advantage that a too high power of individual subcarriers can be avoided. For example, this is of importance for fulfilling power-related requirements specified by different standards.

A second aspect of the invention refers to a method for determining one or more reduction signals for transmission on one or more reduction subcarriers of an OFDM signal, the method comprising a step of determining a real part and an imaginary part of a target reduction amplitude of the one or more reduction signals.

The methods according to the second aspect of the invention can be performed by a signal determination unit according to the first aspect of the invention. Further features or implementations of the method according to the second aspect of the invention can perform the functionality of the signal determination unit according to the first aspect of the invention and its different implementation forms.

The method of the second aspect can be implemented e.g. as code executed on a signal processor.

In a first implementation of the method of the second aspect, the method further comprises initial steps of computing one or more power values of one or more time-domain samples of a data part of the OFDM signal, and selecting one or more peaks of the data part of the OFDM signal based on the computed power values, wherein the real part and the imaginary part of the target reduction amplitude are determined based on the selected one or more peaks.

In a second implementation of the method of the second aspect, the method further comprises a step of estimating the one or more reduction signals using weighted least squares estimation based on the real part and the imaginary part of the target reduction amplitude.

In a third implementation of the method of the second aspect, estimating the one or more reduction signals using weighted least squares estimation comprises a step of estimating a vector $\boldsymbol{x}$ of frequency-domain values of $K$ reduction signals for transmission on $K$ reduction subcarriers as:

$$\boldsymbol{x} = \begin{bmatrix} x_0 \\ \vdots \\ x_{K-1} \end{bmatrix} = \left(\mathrm{T}_{\boldsymbol{yx}}^H \mathrm{W} \mathrm{T}_{\boldsymbol{yx}}\right)^{-1} \mathrm{T}_{\boldsymbol{yx}}^H \mathrm{W} \boldsymbol{y},$$

wherein $\mathrm{T}_{\boldsymbol{yx}} = \begin{bmatrix} \mathrm{T} \\ \mathrm{T} \end{bmatrix}$ and

$$\mathrm{T} = \begin{bmatrix} t_{0,0} & \cdots & t_{0,K-1} \\ \vdots & \ddots & \vdots \\ t_{M-1,1} & \cdots & t_{M-1,K-1} \end{bmatrix}, t_{m,k} = A e^{\frac{j2\pi i_m j_k}{N}}$$

wherein $j_k$, $k = 0,1,\cdots, K - 1$ are subcarrier indices of the $K$ reduction subcarriers, $i_m$, $m = 0,1,\cdots, M - 1$ are time-domain sample indices of M selected peaks, $A$ is a scaling factor of an inverse Fourier transformation, $N$ is a number of time-domain samples of the inverse Fourier transformation, $\boldsymbol{y}$ is a vector of time-domain values of the target reduction amplitude, and W is a matrix with diagonal entries that comprise weights of elements of $\boldsymbol{y}$.

In a fourth implementation of the method the second aspect, the method further comprises a step of assigning one or more weights to one or more elements of a vector $\boldsymbol{y}$ of time-domain values of the target reduction amplitude.

In a fifth implementation of the method of the second aspect, the method further comprises a step of scaling a reduction signal $x_k$ of a $k$-th reduction carrier to obtain a $k$-th scaled reduction signal $c_k$ according to:

$$c_k = \begin{cases} \dfrac{x_k}{|x_k|}\sqrt{l_k}, \text{if } |x_k|^2 > l_k \\ x_k, \text{otherwise} \end{cases}$$

wherein $l_k$ is a power limitation of a $k$-th reduction subcarrier.

A third aspect of the invention refers to a computer-readable storage medium storing program code, the program code comprising instructions for carrying out the method of the second aspect or one of its implementations.

BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.

FIG. 1    is a block diagram illustrating a signal determination unit in accordance with an embodiment of the present invention;

FIG. 2    is a flow chart of a method for determining one or more reduction signals for transmission on one or more reduction subcarriers of an OFDM signal in accordance with a further embodiment of the present invention;

FIG. 3    is a schematic illustration of a transmitter with PAPR reduction based on tone reservation in accordance with a further embodiment of the present invention;

FIG. 4    shows an overview of PAPR reduction signal computation in accordance with a further embodiment of the present invention; and

FIG. 5    shows a performance of PAPR reduction proposed in this invention in accordance with a further embodiment of the present invention.

DETAILED DESCRIPTION OF THE EMBODIMENTS

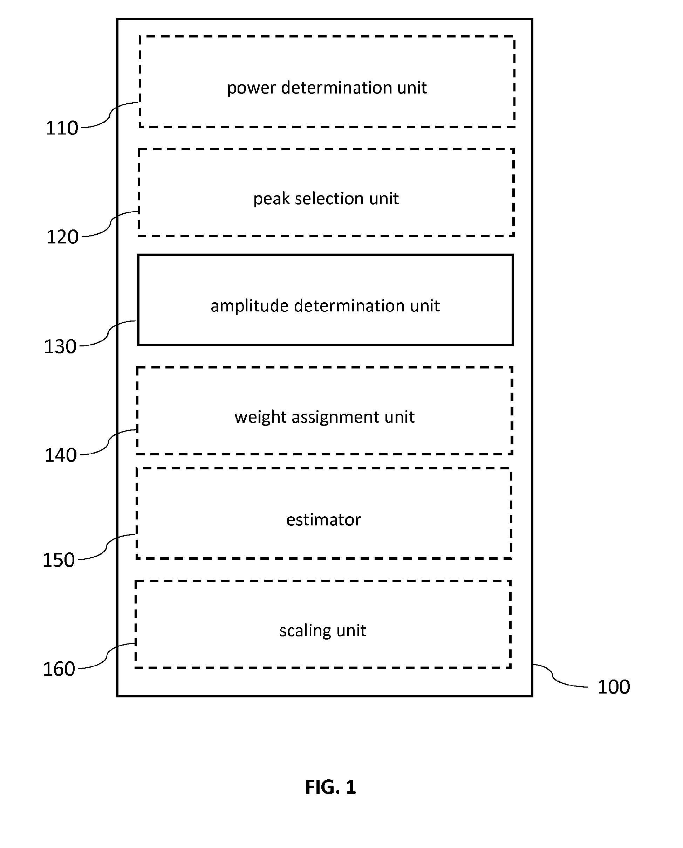

FIG. 1 shows a signal determination unit 100 for determining one or more reduction signals for transmission on one or more reduction subcarriers of an OFDM signal. The signal determination unit 100 comprises an amplitude determination unit 130 configured to determine a real part and an imaginary part of a target reduction amplitude of the one or more reduction signals.

Optionally, as indicated with dashed lines in FIG. 1, the signal determination unit 100 can further comprise a power determination unit 110. The power determination unit 110 is configured to compute one or more power values of one or more time-domain samples of a data part of the OFDM signal. In particular, the power determination unit 110 can be configured to compute power values for all input time-domain signals of all carriers that are not reduction sub-carriers.

Optionally, the signal determination unit 100 can also comprise a peak selection unit 120. The peak selection unit 120 can be configured to select one or more peaks of the data part of the OFDM signal based on computed power values, e.g. the power values computed by the power determination unit 110.

If the signal determination unit 100 comprises a power determination unit 110 and a peak selection unit 120, the amplitude determination unit 130 can be configured to compute the real and imaginary part of the target reduction amplitude based on the power values computed by the power determination unit 110 and based on the peaks selected by the peak selection unit 120.

Optionally, the signal determination unit 140 further comprises a weight assignment unit 140. The weight assignment unit 140 can be configured to assign weights to the time-domain values computed by the amplitude determination unit 130. For example, the weighting can be based on an absolute value of the time-domain samples computed by the amplitude determination unit 130.

Optionally, the signal determination unit 100 further comprises an estimator 150, which can be configured to estimate the one or more reduction signals based on the real part and the imaginary part of the target reduction amplitude computed by the amplitude determination unit 130. If the signal determination unit 100 comprises a weight assignment unit 140, the estimator 150 can be configured to compute the one or more reduction signals based on the weighted time-domain values of the target reduction amplitude.

Optionally, the signal determination unit 100 further comprises a scaling unit 160. The scaling unit 160 can be configured to scale a $k$-th reduction signal to obtain a scaled $k$-th reduction signal. In particular, the scaled reduction signal can be a power-limited reduction signal. The signal determination unit 100 can be configured to output the scaled reduction signals instead of the original unsealed reduction signals.

Optionally, the signal determination unit of the first aspect can for one peak have separate weights during PAPR signal computation, which helps utilizing the power of PAPR signals in an optimized way.

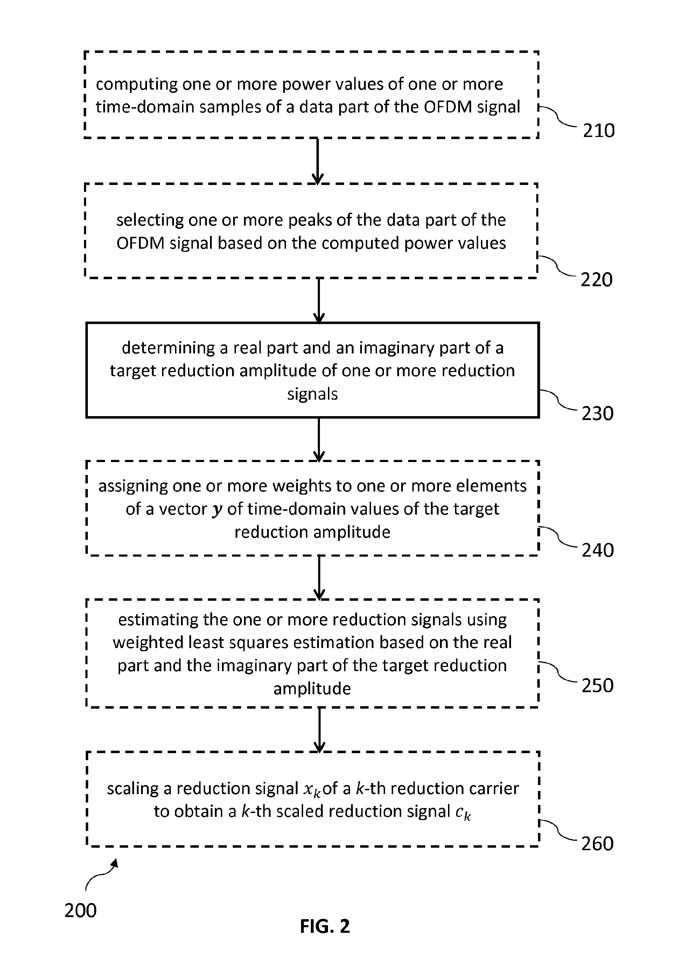

FIG. 2 shows a method 200 for determining one or more reduction signals for transmission on one or more reduction subcarriers of an OFDM signal. The method comprises a step of determining 230 a real part and an imaginary part of a target reduction amplitude of the one or more reduction signals.

Optionally, the method further comprises initial steps 210, 220 of computing 210 one or more power values of one or more time-domain samples of a data part of the OFDM signal, and selecting 220 one or more peaks of the data part of the OFDM signal based on the computed power values. In this case, in step 230, the real part and the imaginary part of the target reduction amplitude are determined based on the selected one or more peaks.

Optionally, the method further comprises one or more final steps 240, 250, 260.

In a first final step 240 one or more weights are assigned to one or more elements of a vector y of time-domain values of the target reduction amplitude.

In a second final step 250 the one or more reduction signals are estimated using weighted least squares estimation based on the real part and the imaginary part of the target reduction amplitude.

In a third final step 260, a reduction signal $x_k$ of a $k$-th reduction carrier is scaled to obtain a $k$-th scaled reduction signal $c_k$. In particular, the scaling can be performed according to:

$$c_k = \begin{cases} \dfrac{x_k}{|x_k|}\sqrt{l_k}, \text{if } |x_k|^2 > l_k \\ x_k, \text{otherwise} \end{cases}$$

wherein $l_k$ is a power limitation of a $k$-th reduction subcarrier.

One or more of the above steps of the method can be implemented e.g. on a signal processor.

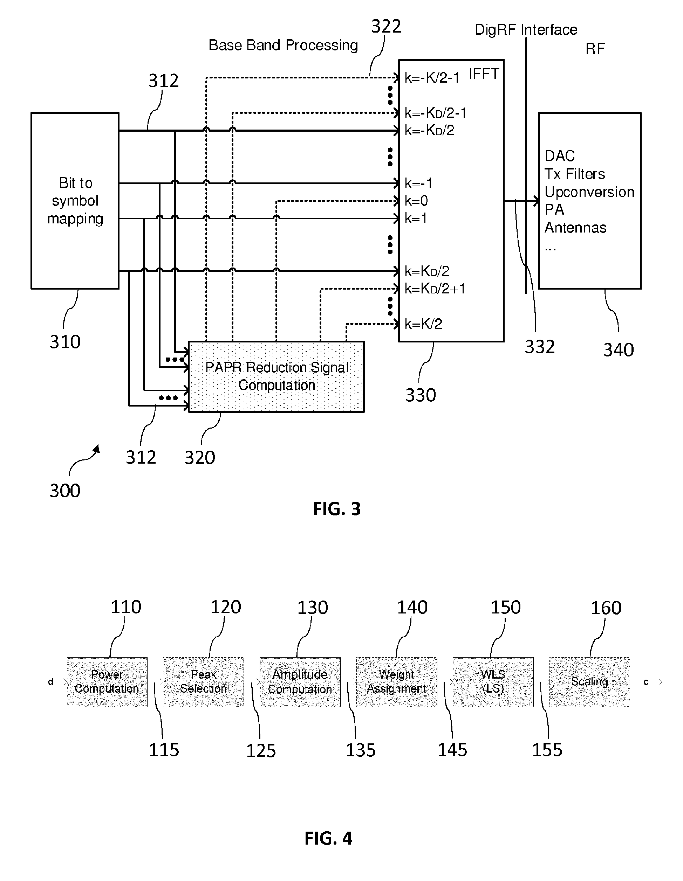

FIG. 3 shows a schematic illustration of a transmitter 300 with PAPR reduction based on tone reservation in accordance with a further embodiment of the present invention.

A first unit 310 of the transmitter 300 performs bit to (OFDM) symbol mapping. The output signals 312 of the first unit 310 are data signals for transmission on different subcarriers. These data signals 312 are provided as input to a PAPR Reduction Signal Computation unit 320 of the transmitter 300, which is a signal determination unit according to an embodiment of the present invention, such as the signal determination unit 100. The PAPR Reduction Signal Computation unit 320 computes reduction signals 322 (shown in FIG. 3 as dashed lines), which are provided as inputs to an IFFT unit 330 of the transmitter 300. The reduction signals correspond to a number of reduction subcarriers (FIG. 3 illustratively shows five reduction signals 332 corresponding to five reduction subcarriers).

In the IFFT unit 330, the frequency domain signals 312, 322 are converted to a time-domain signal 332. The time-domain signal 332 is further processed in an RF unit 340 of the transmitter 300. For example, the time-domain signal can be filtered, up-converted, power-amplified and fed to a plurality of antennas for transmission.

In a preferred embodiment, an LTE cell can be assigned different Channel Bandwidths (BW) and for each Channel BW a number of resource blocks can be defined as presented in Table 1. Note that there are 12 sub-carriers in each resource block and each sub-carrier has 15 KHz bandwidth.

**Table 1 Transmission bandwidth configuration $N_{RB}$ in E-UTRA channel bandwidths**

| Channel BW [MHz] | 1.4 | 3 | 5 | 10 | 15 | 20 |
|---|---|---|---|---|---|---|
| Transmission BW Configuration $N_{RB}$ (RB) | 6 | 15 | 25 | 50 | 75 | 100 |
| Transmission BW Configuration (MHz) | 1.08 | 2.16 | 4.5 | 9 | 13.5 | 18 |

The channel BW is larger than the span of the configured transmission BW. The additional sub-carriers are guard sub-carriers and a Direct Current (DC) sub-carrier.

- Guard sub-carriers

  ◦ Introduced as guard BW between different frequency channels
  ◦ Guard sub-carriers can be located between Channel Bandwidth and Configured Transmission Bandwidth

- DC sub-carrier

  ◦ DC sub-carrier is the center sub-carrier in Channel BW
  ◦ DC sub-carrier is blanked since it can be easily polluted by the DC component in receiver

The PAPR Reduction Signal Computation module 320 and reduction signals generated by it are the additions to a conventional transmitter which does not reduce the PAPR. The dotted lines 322 refer to pre-defined (reserved) sub-carriers (such as the mentioned Guard sub-carriers or the DC sub-carrier). For each OFDM symbol, the PAPR Reduction Signal Computation 320 module calculates the signals for the pre-defined sub-carriers based on the signals on the sub-carriers for data transmission. In the following, the pre-defined sub-carriers for PAPR reduction are referred as SC_PAPR.

In a specific embodiment, the PAPR Reduction Signal Computation module 320 is configured to:

1. Select a certain number of the peaks in time domain based on the power of time domain samples

   a. This can be skipped if all the time domain samples are selected

2. Compute the amplitude to be cancelled for the real and imaginary components of each peak

   a. One threshold and the average signal power is used for the computation

3. Assign the weights for the real and imaginary components of each peak

    a. This can be skipped if all the peaks have equal weights

4. Apply the WLS (Weighted Least Squares Estimation) to compute the signals on SC_PAPR
5. Scale the value on each SC_PAPR if its power exceeds the power limitation

    a. There could be an individual power limitation for each SC_PAPR
    b. This can be skipped if there is no power limitation

FIG. 4 shows a structural overview of the signal processing in the signal determination unit 100 (or the PAPR Reduction Signal Computation module 320) in accordance with a further embodiment of the present invention.
A data signal **d** is provided to a power computation (also designated as power determination unit 110).
The power computation unit 110 computes the power of time domain sample as follows:

$$\boldsymbol{p} = \begin{bmatrix} p_0 \\ \vdots \\ p_{N-1} \end{bmatrix} = \boldsymbol{s}^* \circ \boldsymbol{s} = \begin{bmatrix} |s_0|^2 \\ \vdots \\ |s_{N-1}|^2 \end{bmatrix}, \boldsymbol{s} = \begin{bmatrix} s_0 \\ \vdots \\ s_{N-1} \end{bmatrix}$$

where **s** is vector of time domain samples; $\circ$ is the Hadamard (element-wise) product and $(\cdot)^*$ is the complex conjugate.
The sample vector **s** in time domain can be computed from the data vector **d** in frequency domain, that is,

$$\boldsymbol{s} = \text{IFFT}(\boldsymbol{d}), \boldsymbol{d} = \begin{bmatrix} d_0 \\ \vdots \\ d_{N-1} \end{bmatrix}$$

Note that the sub-carriers in **d** without data transmission can be set as zero. For example, the guard sub-carriers and DC sub-carrier are set as 0 all the time.
The computed power vector **p** is provided as input 115 to a peak selection unit 120.
The peak selection unit 120 is configured to select $M$ peaks based on **p** for the following processing. Assume the indices of the selected **M** peaks are $i_0, i_1, \cdots i_{M-1}$, then we have the peak vector **g**:

$$\boldsymbol{g} = \begin{bmatrix} g_0 \\ \vdots \\ g_{M-1} \end{bmatrix} = \begin{bmatrix} s_{i_0} \\ \vdots \\ s_{i_{M-1}} \end{bmatrix}$$

If all the time domain samples are kept for the following processing, that is, $M = N$, the peak selection unit 120 can be skipped and we use $i_m = m$, $m = 0,1, \cdots M - 1$, and **g** = **s** for the following processing.
The peak vector **g** is provided as input 125 to the amplitude computation unit 130, (also designated as amplitude determination unit 130).
The amplitude computation unit 130 computes the expected amplitude to be cancelled for each selected peak. Each peak is divided into real and imaginary components to calculate the amplitudes of the two components separately based on the time domain average power $\bar{p}$ and a threshold $\alpha$.
The absolute value of the amplitude is computed firstly according to:

$$a'_m = max\big(|\text{Re}(g_m)| - \alpha\sqrt{\bar{p}}, 0\big), m = 0,1, \cdots M - 1$$

$$b'_m = max\big(|\text{Im}(g_m)| - \alpha\sqrt{\bar{p}}, 0\big), m = 0,1, \cdots M - 1$$

where $\alpha$ is a threshold in amplitude computation; $\bar{p}$ is a time domain average power computed from $\bar{p} = \frac{1}{N}\sum_{n=0}^{N-1} p_n$; max ($u$, $v$) is the operation of getting the bigger one from two values; $Re(\cdot)$ is the operation of getting the real component of a complex; $Im(\cdot)$ is the operation of getting the imaginary component of a complex.

If one wants to limit the PAPR less than 9dB, than the threshold $\alpha$ can be set to pick up the peaks with PAPR above 9-$\Delta$dB, e.g., $\Delta$=3 dB, then the corresponding linear value of the power limitation is $4\bar{p}$, where 4 corresponds to 6 (=9-$\Delta$) dB. Since we separate the real component and imaginary component for processing, the corresponding average power of real /imaginary component should not be more than $4 \cdot \frac{\bar{p}}{2}$, where $\frac{\bar{p}}{2}$ is the average power of real/imaginary component. Then, the amplitude corresponding to the power of $4 \cdot \frac{\bar{p}}{2}$ is $\sqrt{4 \cdot \frac{\bar{p}}{2}} = \sqrt{2 \cdot \bar{p}} = \sqrt{2} \cdot \sqrt{\bar{p}}$, that is, $\alpha = \sqrt{2}$ for this case.

From an implementation point of view, $\alpha$ is just a threshold coupled with $\sqrt{\bar{p}}$ and $\Delta$ is not seen.

The sign of amplitude is given secondly according to:

$$a_m = a'_m \cdot sign\big(\mathrm{Re}(g_m)\big)$$

$$b_m = b'_m \cdot sign\big(\mathrm{Im}(g_m)\big)$$

where $sign(\cdot)$ is the operation to get the sign of a value.

Then, the amplitude vector with length 2$M$ is obtained according to:

$$\boldsymbol{y} = \begin{bmatrix} y_0 \\ \vdots \\ y_{2M-1} \end{bmatrix} = - \begin{bmatrix} a_0 \\ \vdots \\ a_{M-1} \\ jb_0 \\ \vdots \\ jb_{M-1} \end{bmatrix}$$

where $j = \sqrt{-1}$ is the imaginary factor.

The real and imaginary component of the target reduction amplitude, computed as described above, are provided as input 135 to the weight assignment unit 140.

The weight assignment unit 140 assigns a weight for each element in the amplitude vector $\boldsymbol{y}$, which will be used in following Weighted Least Square Estimation (WLSE) performed by the estimator 150. In general, the bigger absolute value of the amplitude, the more weight will be assigned.

One example of the weight assignment is:

$$w_m = |y_m|^2, m = 0,1, \cdots 2M - 1$$

Then diagonal weight matrix W can be obtained based on $w_m$:

$$W = \begin{bmatrix} w_0 & \cdots & 0 \\ \vdots & \ddots & \vdots \\ 0 & \cdots & w_{2M-1} \end{bmatrix} = \begin{bmatrix} |y_0|^2 & \cdots & 0 \\ \vdots & \ddots & \vdots \\ 0 & \cdots & |y_{2M-1}|^2 \end{bmatrix}$$

The weight matrix W is provided (together with further signals computed above) as an input 145 of the estimator 150. If this step is skipped, then unit matrix will be used as W in following processing.

To reduce the PAPR, the values for SC_PAPR in frequency domain should match the target signal *y* in time domain as much as possible. Therefore, an estimate is computed in the estimator 150.

As it is well known, when we apply IFFT on an unit value 1 on sub-carrier *k*, its corresponding time domain value on sample *m* is $Ae^{\frac{j2\pi mk}{N}}$. Further on, when we apply IFFT on SC_PAPR with sub-carrier index $j_k$, $k = 0,1,\cdots K$ - 1 and value $x_k$, $k = 0,1,\cdots K$ - 1, the corresponding response on samples $i_m$, $m = 0,1, \cdots M$ - 1 in time domain will be,

$$\mathrm{T}\boldsymbol{x} = \begin{bmatrix} t_{0,0} & \cdots & t_{0,K-1} \\ \vdots & \ddots & \vdots \\ t_{M-1,1} & \cdots & t_{M-1,K-1} \end{bmatrix} \begin{bmatrix} x_0 \\ \vdots \\ x_{K-1} \end{bmatrix}, t_{m,k} = Ae^{\frac{j2\pi i_m j_k}{N}}$$

Since we want to keep the option to assign different weights for real component and imaginary component of sample $i_m$ in time domain, we try to match $\begin{bmatrix} \mathrm{T} \\ \mathrm{T} \end{bmatrix} \boldsymbol{x} = \mathrm{T}_{yx}\boldsymbol{x}$ to $\boldsymbol{y}$ to y as much as possible based on WLS.

The estimator 150 can be configured to compute the signals of the reduction signals carrying SC_PAPR as below,

$$\boldsymbol{x} = \begin{bmatrix} x_0 \\ \vdots \\ x_{K-1} \end{bmatrix} = \left( \mathrm{T}_{yx}^H \mathrm{W} \mathrm{T}_{yx} \right)^{-1} \mathrm{T}_{yx}^H \mathrm{T}\mathbf{y}$$

where $\mathrm{T}_{yx} = \begin{bmatrix} \mathrm{T} \\ \mathrm{T} \end{bmatrix}$ = and T is given as:

$$\mathrm{T} = \begin{bmatrix} t_{0,0} & \cdots & t_{0,K-1} \\ \vdots & \ddots & \vdots \\ t_{M-1,1} & \cdots & t_{M-1,K-1} \end{bmatrix}, \ t_{m,k} = Ae^{\frac{j2\pi i_m j_k}{N}}$$

where $j_k, k = 0,1,\cdots K$ - 1, are the sub-carrier indexes of the *K* SC_PAPR and $t_{m,k}$ refers to the response of kth SC_PAPR on mth time domain sample.

Since the first half elements and second half elements are from the same peaks, the matrix T is repeated twice in $T_{yx}$.

The estimated signals **x** can be provided (together with further signals computed as described above) as input 155 to a scaling unit 160.

The signal of each reduction signal subcarrier SC_PAPR, $x_k$, could have an individual power limitation, that is, if the power of $x_k$ exceeds its limitation, scaling shall be implemented to get the updated signal $c_k$, which is shown in the following equation:

$$c_k = \begin{cases} \dfrac{x_k}{|x_k|} \sqrt{l_k}, if \ |x_k|^2 > l_k \\ x_k, otherwise \end{cases}$$

where $l_k$ is the power limitation of a k-th reduction signal subcarrier.

The scaling here is to ensure that the transmission power related requirements specified by standards are fulfilled. Take LTE as an example, the power leakage to the adjacent channels must fulfill the requirement of Adjacent Channel Leakage Power Ratio (ACLR) in 3GPP, which means the scaling becomes mandatory if the guard sub-carriers are used as SC_PAPR.

To summarize, embodiments of the invention reduce the PAPR of a transmitted signal, which will further:

• Improve the SQNR in ADC/DAC
• Improve the PA efficiency, decrease its cost and its power consumption

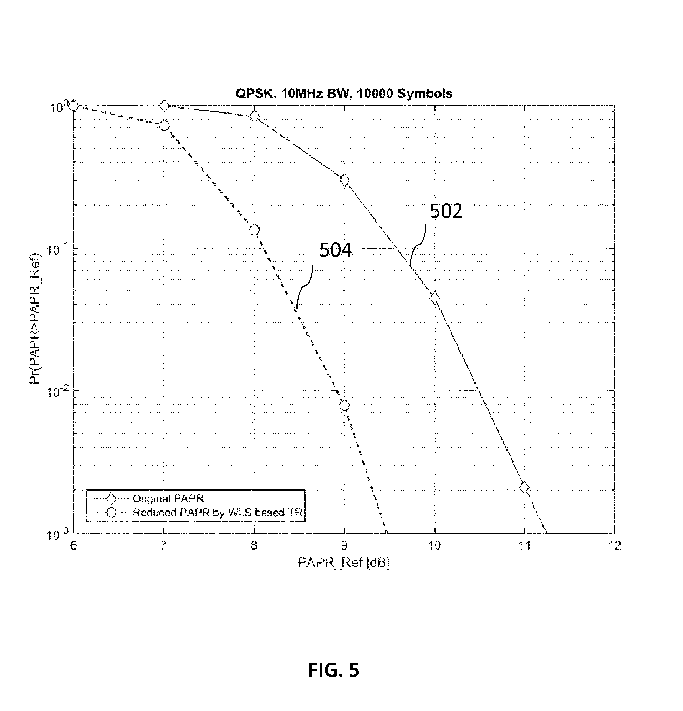

The performance of the signal determination unit as used for PAPR reduction is illustrated in the diagram of FIG. 5. The used simulation configuration is shown in Table 2. The x-axis of the diagram shows the PAPR Reference (PAPR-REF) in dB. The y-axis shows the probability that PAPR>PAPR_Ref. As an example for PAPR-Ref=9dB it can be seen that PAPR of original PAPR (curve 502) exceeds the PAPR=9dB with ~30% probability. However, after the PAPR reduction as performed by embodiments of the present invention, the PAPR of processed signal (curve 504) exceeds the PAPR=9dB with only ~0.08% probability.

**Table 2 Simulation parameters**

| | |
|---|---|
| Channel Bandwidth (MHz) | 10 |
| IFFT size | 1024 |
| Number of sub-carriers with data transmission | 600 |
| Number of SC_PAPR | 66[note1] |
| Modulation | QPSK |
| $\alpha$ | $\sqrt{2}$ |
| $l_k$ | 1 for all $k$ |
| Note: 65 guard sub-carriers plus 1 DC sub-carrier | |

The foregoing descriptions are only implementation manners of the present invention, the protection of the scope of the present invention is not limited to this. Any variations or replacements can be easily made through person skilled in the art. Therefore, the protection scope of the present invention should be subject to the protection scope of the attached claims.

**Claims**

1. A signal determination unit (100; 320) for determining one or more reduction signals for transmission on one or more reduction subcarriers of an OFDM signal, wherein the signal determination unit comprises an amplitude determination unit (130) configured to determine (230) a real part and an imaginary part of a target reduction amplitude of the one or more reduction signals (322).

2. The signal determination unit (100; 320) of claim 1, wherein the amplitude determination unit (130) is configured to determine a real part $a'_m$ of an absolute value of the target reduction amplitude and an imaginary part $b'_m$ of an absolute value of the target reduction amplitude as:

$$a'_m = \max\big(|\mathrm{Re}(g_m)| - \alpha\sqrt{\bar{p}}, 0\big)$$

$$b'_m = \max\big(|\mathrm{Im}(g_m)| - \alpha\sqrt{\bar{p}}, 0\big)$$

and/or a signed real part $a_m$ and a signed imaginary part $b_m$ of the target reduction amplitude as:

$$a_m = a'_m \cdot \mathrm{sign}\big(\mathrm{Re}(g_m)\big)$$

$$b_m = b'_m \cdot \mathrm{sign}\big(\mathrm{Im}(g_m)\big)$$

wherein $g_m$ is a value of a peak of the OFDM signal, $\alpha$ is a predetermined threshold parameter and $\bar{p}$ is a time-domain average power of a data part (312) of the OFDM signal.

3. The signal determination unit (100; 320) of one of the previous claims, further comprising:

   - a power determination unit (110) configured to compute (210) one or more power values of one or more time-domain samples of a data part (312) of the OFDM signal, and
   - a peak selection unit (120) configured to select one or more peaks (125) of the data part of the OFDM signal based on the computed power values,
   wherein the amplitude determination unit (130) is configured to determine the real part and the imaginary part of the target reduction amplitude based on the selected one or more peaks.

4. The signal determination unit (100; 320) of one of the previous claims, further comprising an estimator (150) configured to estimate (250) the one or more reduction signals (322) using weighted least squares estimation based on the real part and the imaginary part of the target reduction amplitude.

5. The signal determination unit (100; 320) of claim 4, wherein the estimator (150) is configured to estimate a vector $\boldsymbol{x}$ of frequency-domain values of $K$ reduction signals for transmission on $K$ reduction subcarriers as:

$$\boldsymbol{x} = \begin{bmatrix} x_0 \\ \vdots \\ x_{K-1} \end{bmatrix} = \left( T_{yx}^H W T_{yx} \right)^{-1} T_{yx}^H W \boldsymbol{y},$$

wherein $T_{yx} = \begin{bmatrix} T \\ T \end{bmatrix}$ and

$$T = \begin{bmatrix} t_{0,0} & \cdots & t_{0,K-1} \\ \vdots & \ddots & \vdots \\ t_{M-1,1} & \cdots & t_{M-1,K-1} \end{bmatrix}, t_{m,k} = A e^{\frac{j2\pi i_m j_k}{N}}$$

wherein $j_k$, $k = 0,1,\cdots, K$ - 1 are subcarrier indices of the $K$ reduction subcarriers, $i_m$, $m = 0,1,\cdots, M$ - 1 are time-domain sample indices of $M$ selected peaks, $A$ is a scaling factor of an inverse Fourier transformation, $N$ is a number of time-domain samples of the inverse Fourier transformation, $\boldsymbol{y}$ is a vector of time-domain values of the target reduction amplitude, and W is a matrix with diagonal entries that comprise weights of elements of $\boldsymbol{y}$.

6. The signal determination unit (100; 320) of one of the previous claims, further comprising a weight assignment unit (140) configured to assign one or more weights to one or more elements of a vector $\boldsymbol{y}$ of time-domain values of the target reduction amplitude.

7. The signal determination unit (100; 320) of claim 6, wherein a weight assignment $w_m$ for an $m$-th element of the vector $\boldsymbol{y}$ is determined as $w_m = |y_m|^2$.

8. The signal determination unit (100; 320) of one of the previous claims, further comprising a scaling unit (160) configured to scale a reduction signal $x_k$ of a $k$-th reduction subcarrier to obtain a scaled $k$-th reduction signal $c_k$ according to:

$$c_k = \begin{cases} \dfrac{x_k}{|x_k|} \sqrt{l_k}, \text{if } |x_k|^2 > l_k \\ x_k, \text{otherwise} \end{cases}$$

wherein $l_k$ is a power limitation of a $k$-th reduction subcarrier.

9. A method (200) for determining one or more reduction signals (322) for transmission on one or more reduction subcarriers of an OFDM signal, the method comprising a step of determining (230) a real part and an imaginary part of a target reduction amplitude of the one or more reduction signals (322).

10. The method (200) of claim 9, further comprising initial steps of:

- computing (210) one or more power values of one or more time-domain samples of a data part of the OFDM signal, and
- selecting (220) one or more peaks of the data part of the OFDM signal based on the computed power values, wherein the real part and the imaginary part of the target reduction amplitude are determined based on the selected one or more peaks.

11. The method (200) of claim 9 or 10, further comprising a step of estimating (250) the one or more reduction signals using weighted least squares estimation based on the real part and the imaginary part of the target reduction amplitude.

12. The method (200) of claim 11, wherein estimating (250) the one or more reduction signals (322) using weighted least squares estimation comprises a step of estimating a vector $x$ of frequency-domain values of $K$ reduction signals for transmission on $K$ reduction subcarriers as:

$$x = \begin{bmatrix} x_0 \\ \vdots \\ x_{K-1} \end{bmatrix} = \left(\mathrm{T}_{yx}^H \mathrm{W} \mathrm{T}_{yx}\right)^{-1} \mathrm{T}_{yx}^H \mathrm{W} y,$$

wherein $\mathrm{T}_{yx} = \begin{bmatrix} \mathrm{T} \\ \mathrm{T} \end{bmatrix}$ and

$$\mathrm{T} = \begin{bmatrix} t_{0,0} & \cdots & t_{0,K-1} \\ \vdots & \ddots & \vdots \\ t_{M-1,1} & \cdots & t_{M-1,K-1} \end{bmatrix}, t_{m,k} = A e^{\frac{j2\pi i_m j_k}{N}}$$

wherein $j_k$, $k = 0,1,\cdots, K$ - 1 are subcarrier indices of the $K$ reduction subcarriers, $i_m$, $m = 0,1,\cdots, M$ - 1 are time-domain sample indices of $M$ selected peaks, $A$ is a scaling factor of an inverse Fourier transformation, $N$ is a number of time-domain samples of the inverse Fourier transformation, $y$ is a vector of time-domain values of the target reduction amplitude, and W is a matrix with diagonal entries that comprise weights of elements of $y$.

13. The method (200) of one of claims 9 to 12, further comprising a step of assigning (240) one or more weights to one or more elements of a vector $y$ of time-domain values of the target reduction amplitude.

14. The method (200) of one of claims 9 to 13, further comprising a step of scaling (260) a reduction signal $x_k$ of a $k$-th reduction carrier to obtain a $k$-th scaled reduction signal $c_k$ according to:

$$c_k = \begin{cases} \dfrac{x_k}{|x_k|} \sqrt{l_k}, \text{if } |x_k|^2 > l_k \\ x_k, \text{otherwise} \end{cases}$$

wherein $l_k$ is a power limitation of a $k$-th reduction subcarrier.

15. A computer-readable storage medium storing program code, the program code comprising instructions for carrying out the method of claims 9 to 14.

**FIG. 1**

computing one or more power values of one or more time-domain samples of a data part of the OFDM signal

210

selecting one or more peaks of the data part of the OFDM signal based on the computed power values

220

determining a real part and an imaginary part of a target reduction amplitude of one or more reduction signals

230

assigning one or more weights to one or more elements of a vector $y$ of time-domain values of the target reduction amplitude

240

estimating the one or more reduction signals using weighted least squares estimation based on the real part and the imaginary part of the target reduction amplitude

250

scaling a reduction signal $x_k$ of a $k$-th reduction carrier to obtain a $k$-th scaled reduction signal $c_k$

260

200

**FIG. 2**

322

Base Band Processing

DigRF Interface

RF

312

k=-K/2-1 IFFT

k=-K_D/2-1
k=-K_D/2

Bit to
symbol
mapping

k=-1
k=0
k=1

310

k=K_D/2
k=K_D/2+1

k=K/2

DAC
Tx Filters
Upconversion
PA
Antennas
...

332

340

PAPR Reduction Signal
Computation

330

312   320

300

**FIG. 3**

110        120        130        140        150        160

d →  Power
Computation  →  Peak
Selection  →  Amplitude
Computation  →  Weight
Assignment  →  WLS
(LS)  →  Scaling  → c →

115        125        135        145        155

**FIG. 4**

**FIG. 5**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIN LV ET AL: "A New Weighted Tone Reservation Method for PAPR Reduction in OFDM Systems", JOURNAL OF COMMUNICATIONS, 1 January 2014 (2014-01-01), XP055267191, ISSN: 2374-4367, DOI: 10.12720/jcm.9.12.980-986 * Sections I. and II. * | 1-4, 6-11, 13-15 | INV. H04L27/26 |
| X | US 7 796 498 B2 (YIN HUJUN [US] ET AL) 14 September 2010 (2010-09-14) * figures 1,5 * * Section Background * * column 2, line 9 - column 3, line 30 * | 1-4, 6-11, 13-15 | |
| X | US 2008/219372 A1 (HORI KAZUYUKI [JP] ET AL) 11 September 2008 (2008-09-11) * paragraph [0050] - paragraph [0057] * * figure 5 * | 1-4, 6-11, 13-15 | |
| T | JIANG TAO ET AL: "A Novel Multi-Block Tone Reservation Scheme for PAPR Reduction in OQAM-OFDM Systems", IEEE TRANSACTIONS ON BROADCASTING, IEEE SERVICE CENTER, PISCATAWAY, NJ, US, vol. 61, no. 4, 1 December 2015 (2015-12-01), pages 717-722, XP011592765, ISSN: 0018-9316, DOI: 10.1109/TBC.2015.2465146 [retrieved on 2015-12-04] | | **TECHNICAL FIELDS SEARCHED (IPC)** H04L |

The present search report has been drawn up for all claims

| Place of search | Date of completion of the search | Examiner |
|---|---|---|
| Berlin | 21 April 2016 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 2273

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2016

| Patent document cited in search report | | Publication date | Patent family member(s) | | Publication date |
|---|---|---|---|---|---|
| US 7796498 | B2 | 14-09-2010 | NONE | | |
| US 2008219372 | A1 | 11-09-2008 | CN | 101262461 A | 10-09-2008 |
| | | | JP | 4823107 B2 | 24-11-2011 |
| | | | JP | 2008227724 A | 25-09-2008 |
| | | | US | 2008219372 A1 | 11-09-2008 |

EPO FORM P0459

For more details about this annex : see Official Journal of the European Patent Office, No. 12/82